# DEMANDE DE BREVET EUROPEEN

(11) **EP 0 557 772 A1**
(43) Date de publication de la demande: **01.09.1993**
(21) Numéro de dépôt: 93101913.7
(22) Date de dépôt: 08.02.1993
(51) Int. Cl.: G06K 13/08, G06K 7/06

(54) **Lecteur des cartes magnétiques, optiques et à puce**

(30) Priorité: 28.02.1992 CH 629/92
(71) Demandeur: Landis & Gyr Business Support AG, CH-6301 Zug (CH)
(72) Inventeur: Bandelier, Jean-Claude, CH-1217 Meyrin (CH); Catherine, Claude, F-01630 Sergy (FR); Dombre, Georges, F-74140 St. Cergues (FR)
(74) Mandataire: Reverdin, André Pierre

(57) **Abrégé**

Un lecteur de cartes magnétiques, optiques ou à puce, du type où la carte est insérée par l'utilisateur, comprend des moyens pour abaisser un connecteur de puce indépendamment des moyens de lecture optique ou magnétique. Un dispositif d'échappement permet de retirer la carte, sans endommager les contacts de la puce, en cas de panne.

## Description

La présente invention concerne le domaine des lecteurs de cartes du type servant de support de données, certaines de ces données étant lisibles par machine, comme par exemple des cartes à piste magnétique, des cartes optiques ou des cartes à puce.

Des lecteurs de ce type de carte sont connus, par exemple du document DE 41 07 544 A1, permettant de reconnaître et d'utiliser des cartes présentant l'une ou l'autre des technologies de lecture de données évoquées ci-dessus, ou plusieurs de ces technologies à la fois.

Cependant, l'éventualité d'incidents de fonctionnement, liés par exemple à un défaut d'alimentation électrique ou à des défaillances de logiciel, entraîne des conséquences préjudiciables à la fois à l'utilisateur et au prestataire de services ayant délivré la carte à l'utilisateur. Ceci est particulièrement vrai dans le cas où le lecteur est de conception telle que la carte doit y être complètement introduite. Même si elle reste accessible à l'utilisateur en cas de panne, le fait qu'elle est avalée par le lecteur est source de difficultés. Dans le cas où le possesseur ne s'est rendu responsable d'aucune erreur de manoeuvre, la perspective de se voir indûment privé de sa carte inquiète son possesseur et sa confiance dans le système tel que proposé par le prestataire s'en trouve diminuée.

C'est pourquoi des lecteurs ont été proposés, comme par exemple celui décrit dans le document CH 677 411, dans lequel l'utilisateur insère latéralement sa carte dans la bouche du lecteur; cette bouche comprend donc une ouverture dont l'une des dimensions correspond à l'épaisseur de la carte, et l'autre à sa longueur. Dans ce type de lecteur, les pistes magnétiques ou pistes optiques ou puces sont lisibles par le lecteur, et l'utilisateur garde la possibilité de retirer sa carte dans la mesure où une portion de la carte suffisamment étendue reste à sa portée et permet de la retirer, sans trop d'effort, en cas d'incident. D'autres avantages sont procurés par ce type de lecteur à introduction latérale de la carte par l'utilisateur, comme la possibilité de mieux contrôler le comportement thermique du substrat de la carte, et de s'accommoder sans trop de problèmes d'un état de surface ou d'usure de la carte qui compromettraient son entraînement dans un système classique où la carte est avalée dans le lecteur.

Cependant, les lecteurs à introduction latérale par l'utilisateur ont pour l'instant été limités dans la pratique soit aux cartes à lecture notamment optique (voir les brevets CH 574 144 et CH 640361), soit aux cartes à puce. En effet, les dimensions des têtes de lecture de la piste optique ou magnétique, qui doivent parcourir la carte sur toute sa longueur puisque la carte est fixe, interdisaient la coexistence de ces têtes avec un connecteur venant s'appliquer sur la puce d'une carte à puce.

Par ailleurs, la possibilité de retirer en tout temps sa carte du lecteur, si elle apporte une plus grande flexibilité d'utilisation, par exemple dans l'utilisation d'appareils automatiques à temps perdu, par exemple à l'arrêt du bus, comporte un risque d'endommager les contacteurs de la puce et du lecteur, par friction de surfaces métalliques, et donc d'abréger la durée de vie de la puce et du connecteur. Par ailleurs, l'éventualité d'une carte retirée du lecteur pendant le traitement d'informations comporte un risque de contacts parasites au moment de la friction de surfaces métalliques. Il est donc important d'assurer un signal de coupure correct au programme du lecteur en cas de retrait intempestif de la carte.

L'invention se propose de remédier à ces inconvénients pour les lecteurs de carte du type décrit dans le préambule de la revendication 1, par les moyens décrits dans la partie caractérisante de cette même revendication.

L'invention concerne également l'utilisation du dispositif revendiqué, c'est-à-dire un procédé de lecture de cartes optiques et/ou magnétiques et à puce, ou éventuellement de cartes ne comprenant qu'une puce, ou encore de cartes ne comprenant que des pistes optiques et/ou magnétiques.

D'autres formes de réalisation sont décrites dans les sous-revendications.

Dans une forme de réalisation de l'invention, un organe électro-mécanique pourra exercer, sur un levier portant le connecteur destiné à effectuer le contact avec la puce, une pression normale à la surface de la carte. L'action de cet organe, qui peut être par exemple un électro-aimant, sera tributaire du fonctionnement normal du programme du lecteur, et un élément de rappel mécanique, par exemple un ressort, exercera une action antagoniste de cet organe. Dans cette forme, un incident logiciel dans le programme du lecteur devra désactiver l'alimentation de l'électro-aimant, ce qui fera s'écarter automatiquement le connecteur de la puce par l'action du ressort.

Dans une autre forme de réalisation de l'invention, l'organe exerçant la pression sur le levier portant le connecteur pourra être entraîné par des moyens mécaniques.

Dans une autre forme de réalisation de l'invention, un mécanisme d'échappement permet au levier d'échapper à la pression de l'organe en cas de panne du lecteur. Ce mécanisme peut notamment être actionné, à défaut de toute source d'énergie, par la force de l'utilisateur retirant sa carte. Il a pour effet de permettre à l'élément de rappel mécanique d'écarter automatiquement le connecteur de la puce. L'avantage est de ménager les contacts de la puce et du connecteurs lors du retrait de la carte de la bouche du lecteur par l'usager en cas de fin anormale d'opération, au moins sur la partie terminale de sa course.

Dans une autre forme de réalisation de l'invention, l'organe entraîné mécaniquement est une roulette dont l'extrémité tournée vers la bouche du lecteur est lisse et susceptible de glisser sur le flanc du levier au moment de l'échappement. Le levier est relié au lecteur par une liaison à rotule permettant non seulement une rotation du levier dans un plan vertical normal à la surface de la carte, mais aussi un début de rotation autour d'un axe vertical passant par le centre de la rotule. En cas de fin anormale d'opération, l'utilisateur exerce sur la carte une force d'extraction. A un moment donné, le support va opposer une résistance à cette extraction et la carte aura tendance à glisser par rapport à ce support. Dans le cas où le levier est encore abaissé sous la pression de l'organe et le connecteur appliqué sur la puce, le connecteur va donc frotter sur les contacts de la puce. Pour limiter ce frottement de glissement, le levier va se laisser entraîner par la carte en tournant autour de l'axe vertical passant par la rotule, jusqu'à ce qu'il dépasse l'extrémité de la roulette. A ce moment le levier se soulève par échappement et achève de libérer la carte. Le glissement des contacts est ainsi limité à une rotation qui sera d'autant plus faible que la rotule sera plus éloignée de la puce, compte tenu des dimensions du lecteur. On placera dans ce but avantageusement la rotule du côté opposé à la puce, pour allonger au maximum la partie utile du levier.

Dans une autre forme de réalisation de l'invention, la carte prend appui sur le support par l'intermédiaire de butées.

Dans une autre forme de réalisation de l'invention, la roulette est mobile en rotation à l'extrémité d'un basculeur pivotant dans un plan vertical sous l'action d'un poussoir lui-même entraîné par une pièce liée à un chariot se déplaçant horizontalement.

Dans une autre forme de réalisation de l'invention, un chariot pouvant être identique au chariot précédent est actionné par un moteur soumis à un programme comportant une séquence d'opérations visant notamment à la reconnaissance du type de carte introduite dans le lecteur, cette séquence pouvant commencer par un essai de lecture de données codées optiquement ou magnétiquement et se poursuivre par un essai de lecture ou de traitement de données par l'intermédiaire du connecteur, soit commencer par un tel essai de connecteur et se poursuivre par un essai de lecture optique ou magnétique. Le lecteur pourra comporter un commutateur accessible au personnel de service permettant de choisir une séquence par exemple en fonction de la proportion respective de cartes en circulation en clientèle, permettant la lecture de données par un ou plusieurs des trois systèmes. De cette façon, la convivialité du lecteur est augmentée notamment pour les possesseurs de cartes admettant la technologie la plus répandue, simplement par réduction de la durée des routines d'essai en lecteur.
Les moyens de lecture optique ou magnétique peuvent être portés par le chariot et suivre les pistes correspondantes de la carte. Le moyen d'entraînement entre le ou les chariots et le ou les moteurs est par exemple une vis sans fin.

Dans une autre forme de réalisation de l'invention, la carte est maintenue dans le lecteur par des moyens de verrouillage tels que décrits dans le brevet CH 677411. Ces moyens de verrouillage sont destinés à empêcher un retrait intempestif de la carte par l'utilisateur et sont donc inactivés non seulement en fin normale d'opération, mais encore en cas de panne ou de fin anormale d'opération pour permettre à l'utilisateur de retirer sa carte.

D'autres avantages de l'invention apparaîtront à la lumière de la description détaillée qui va suivre, faisant référence au dessin annexé dans lequel:
- la figure 1 représente un dispositif objet de l'invention, vu de profil, prêt à lire la piste optique d'une carte 1.
- la figure 2 représente le même dispositif vu de dessus.
- la figure 3 représente le dispositif vu de profil, avec le connecteur appliqué sur la puce.
- la figure 4 montre une vue de dessus de la figure 3, avec en pointillé une position de la carte en train d'être retirée du lecteur.
- la figure 5 montre une alternative de réalisation de l'invention comprenant un électro-aimant, représenté dans la position correspondant à l'état non activé.
- la figure 6 représente la même réalisation de l'invention avec l'électro-aimant activé.
- la figure 7 montre un détail de la figure 4.

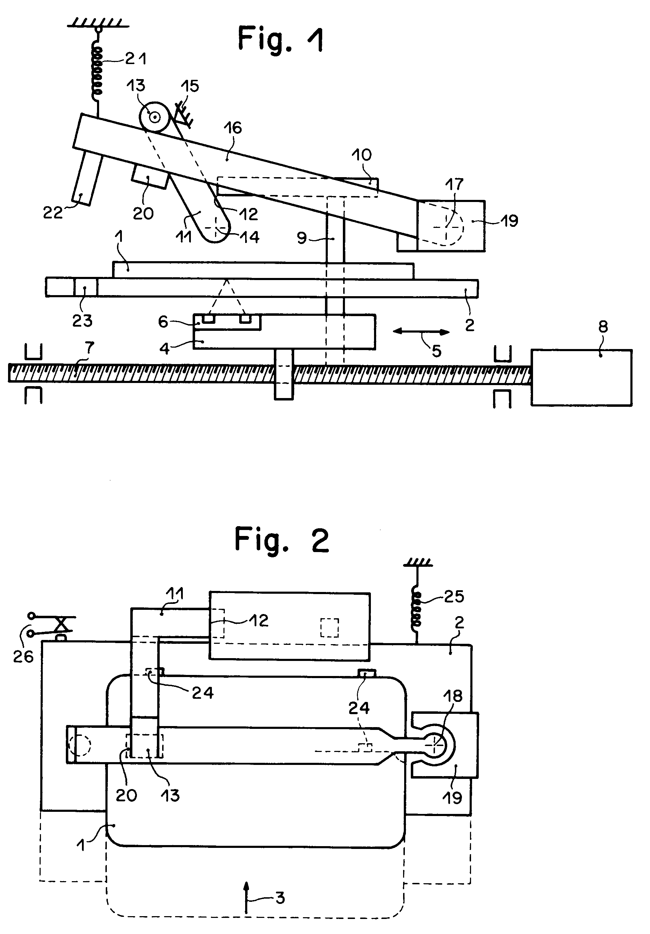

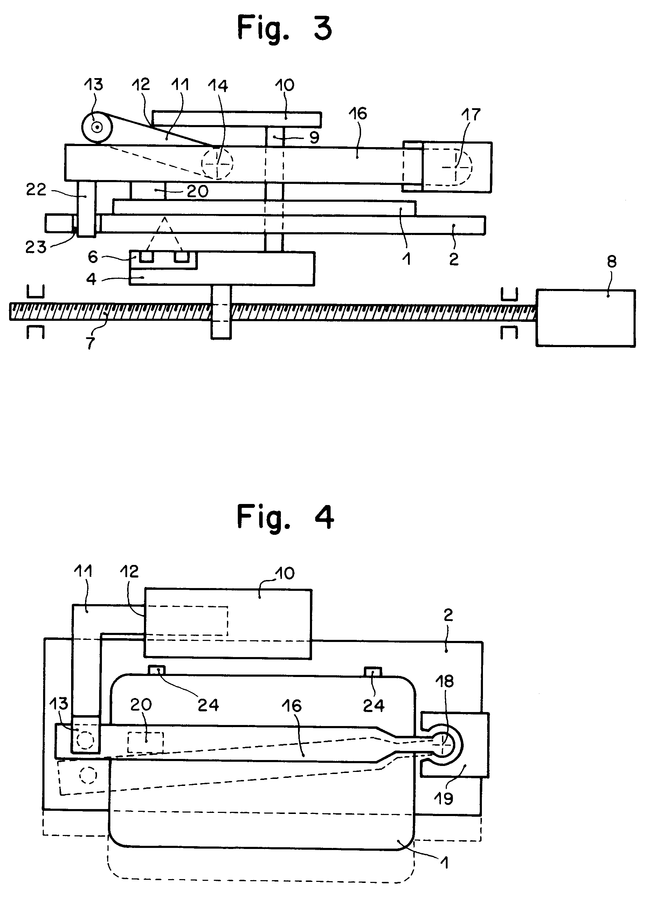

La figure 1 montre la carte 1 portée par un support 2. Ce support 2 est repoussé vers l'entrée du lecteur par un ressort de rappel 25, travaillant en compression, représenté sur la figure 2. La carte 1 et son support 2 occupent la position indiquée en tirets sur la figure 2 au moment de l'introduction de la carte 1 dans le lecteur, et se déplacent selon le sens indiqué par la flèche 3 quand l'usager introduit la carte 1. Un détecteur 26, visible sur la figure 2, détecte quand le support 2, c'est-à-dire la carte 1 est au fond. Le support est alors bloqué à l'aide d'un mécanisme de verrouillage non représenté, mais qui pourrait être tel que celui décrit dans le texte de brevet CH 677411. Un chariot 4 peut se déplacer dans l'une des directions représentées sur la figure 1 par la double flèche 5. Le chariot 4 supporte une tête de lecture optique 6 et peut être entraîné par une vis sans fin 7 mise en rotation par un moteur 8. Le chariot 4 est relié mécaniquement par une pièce 9 à un poussoir 10 qui peut appuyer sur un basculeur 11 en un point 12. Le basculeur 11 peut pivoter autour d'un axe 14 et sa course est limitée par une butée 15. Le basculeur 11 appuie sur un levier 16 au moyen d'une roulette 13. Le levier 16 peut pivoter dans le plan vertical autour d'un axe 17 et dans le plan horizontal autour d'un axe 18 grâce à une articulation à rotule 19. Le levier 16 est équipé d'un connecteur électrique 20 qui prend contact avec la puce de la carte 1 lorsqu'il est abaissé en position horizontale comme indiqué aux figures 3 et 4. Le levier 16 est maintenu en position relevée au moyen d'un ressort 21. Il possède une goupille 22 qui pénètre par une ouverture 23 lorsqu'il est abaissé en position horizontale.
Lorsqu'une carte 1 est introduite dans le lecteur, le support 2 est repoussé par les butées 24 sur lesquelles la carte 1 prend appui, dans la direction indiquée par la flèche 3. Le détecteur 26 constate la fin de course du support 2. Le chariot 4 se déplace alors d'une certaine distance vers la droite pour déterminer avec la tête 6 si celle-ci lit un signal optique déterminé, caractérisant la présence d'une carte optique. Si ce signal n'est pas constaté par le programme de fonctionnement du lecteur, celui-ci inverse le sens de rotation du moteur 8, le chariot repart vers la gauche, le poussoir 10 pousse le basculeur 11 en 12 qui pivote autour de son axe 14, la roulette 13 appuyant sur le levier 16, celui pivote autour de son axe 17 jusqu'a ce qu'il occupe une position horizontale comme indiqué sur les figures 3 et 4. Le ressort 21 est tendu. L'échange et le traitement d'informations s'effectue alors entre la carte 1 et le lecteur par l'intermédiaire du connecteur 20 à l'aide de surfaces métalliques en contact électrique, de manière connue en soi, avec des surfaces correspondantes de la puce. A la fin de l'opération de lecture, le chariot 4 repart vers la droite et sous l'action du ressort 21 le levier 16 se relève, le mécanisme de verrouillage non représenté bloquant le support 2 libère celui-ci et le support 2 de la carte 1 est repoussé vers la sortie sous l'effet du ressort 25. L'usager peut alors reprendre sa carte 1. Lorsque le levier 16 est abaissé, il peut arriver que l'automate tombe en panne, par exemple lors d'incidents de logiciel ou de réseau, ou si une partie des circuits de commande devient défectueuse. Dans ce cas si le lecteur est équipé d'un système semblable à celui décrit dans le texte de brevet CH 677411, il est possible de retirer la carte. Pour éviter d'abîmer les contacts de liaison d'une part et d'autre part de permettre la transmission d'un signal correct de coupure au programme de fonctionnement du lecteur, le levier 16 peut grâce à son articulation à rotule 19 et à la goupille 22 qui se trouve dans l'ouverture 23 effectuer un mouvement de rotation lors d'un mouvement du support 2 inverse à la direction de la flèche 3 quand la carte 1 est arrachée par l'usager. Dès que la rotation du levier 16 est suffisante, c'est-à-dire que la roulette 13 n'appuie plus sur le levier 16, comme le montre en tirets la figure 4, le levier 16 se relève sous l'effet du ressort 21.

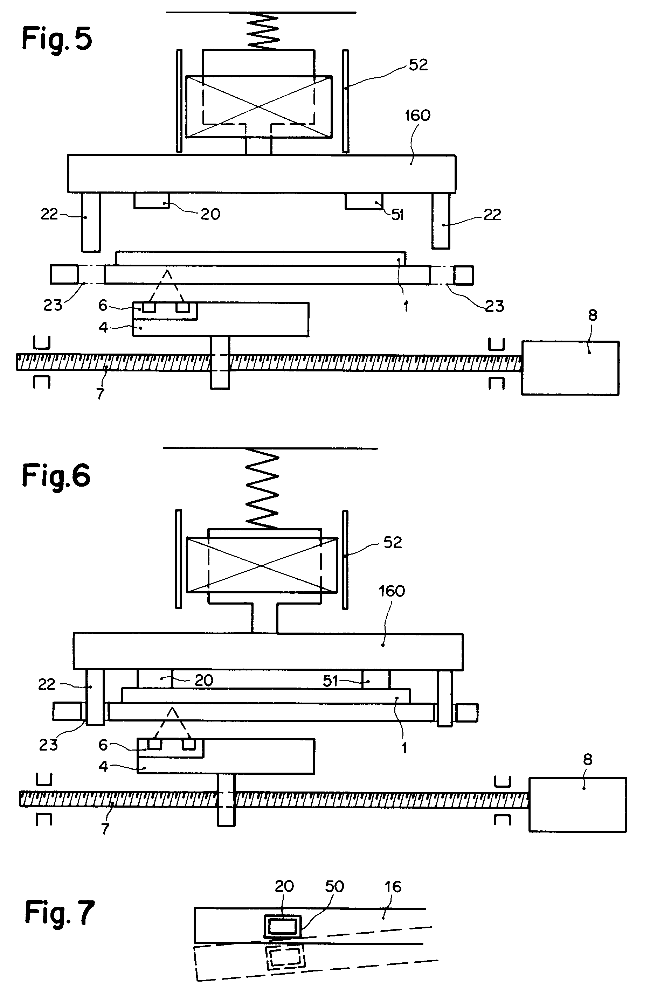

Les figures 5 et 6 montrent une autre forme de réalisation de l'invention faisant appel à un électro-aimant 52. Dans la figure 5, l'électro-aimant 52 est désactivé et la pièce 160, solidaire du plongeur de l'électro-aimant 52, reste au-dessus du support 2 et de la carte 1, dans une position de repos de l'électro-aimant 52.
La pièce 160 comprend deux goupilles 22 s'insérant dans des trous 23 du support de carte 2, ainsi que le connecteur 20 et une pièce d'équilibrage 51.
La figure 6 montre le même dispositif, l'électro-aimant 52 étant cette fois activé. Sous l'action du plongeur de l'électro-aimant 52, la pièce 160 descend sur le support 2 et les goupilles 22 pénètrent dans les trous 23. Le connecteur 20 est appliqué sur la puce de la carte 1, et le traitement de données peut s'effectuer. La pièce d'équilibrage 51, de même épaisseur que le connecteur 20, a notamment pour rôle d'éviter que la pièce 160 se mette en porte-à-faux dans sa course, compte tenu du fait que dans les systèmes de carte à puce courants, la puce est décentrée.
Le retrait de la carte 1 entraîne le support 2 et ouvre le contact 26, ce qui inactive l'alimentation de l'électro-aimant 52 et provoque le retour à la position de repos relevant le connecteur 20, ce qui facilite la transmission d'un signal de coupure correct ainsi que le retrait de la carte 1.
La figure 7 représente une forme particulière de réalisation du dispositif représenté dans les figures 1 à 4, concernant le levier 16 et le connecteur 20. Une pièce 50 sera insérée entre le levier 16 et le connecteur 20, aménageant entre ces deux pièces un jeu calculé de façon à limiter au maximum la friction relative résiduelle des surfaces métalliques du connecteur et de la puce lorsque la carte est retirée, comme le montre la partie en tirets de la figure 7, ceci sans compromettre la fiabilité des contacts respectifs entre ces surfaces.

La description présentée ci-dessus est une forme de réalisation, mais bien-entendu différentes variantes sont possibles. Le basculeur 11 et le levier 16 peuvent avoir des formes différentes suivants les besoins constructifs. Le levier 16 pourrait être abaissé par l'action d'un moteur agissant sur sa rotation dans le plan vertical à la place du poussoir 10 agissant sur le basculeur 11. Au lieu de commencer par vérifier si la carte a une piste optique, on pourrait choisir la séquence qui fait d'abord abaisser le levier 16 pour contrôler si on a affaire à une carte à puce.
Il est entendu que le fonctionnement précédemment détaillé peut aussi s'appliquer à l'exemple des pistes magnétiques.

## Revendications

1. Lecteur de cartes optiques, ou magnétiques, ou à puce, ou d'un type de carte faisant appel à une combinaison quelconque de ces technologies, du type où la carte (1) peut être retirée en tout temps par l'utilisateur, comprenant un connecteur électrique (20) amovible et comprenant lui-même une pluralité de surfaces métalliques aptes à créer une liaison électronique entre le lecteur et une éventuelle puce, ceci pour permettre un traitement de données entre la puce éventuelle et le programme de fonctionnement du lecteur, caractérisé en ce que des moyens, commandés par le programme de fonctionnement du lecteur, et ayant un effet mécanique sur le connecteur (20) consistant à appliquer ses surfaces sur la puce éventuelle, sont désactivés en cas de retrait de la carte (1) par l'utilisateur et en cas de panne du programme.

2. Lecteur selon revendication 1, caractérisé en ce que ces moyens comprennent un relais électromécanique (52) qui actionne le connecteur (20) par l'intermédiaire d'une pièce mécanique (160) engendrant un mouvement du connecteur (20) devenant normal à la surface de la carte (1) au moment de l'établissement du contact avec la portion de la carte (1) où est supposée être la puce.

3. Lecteur selon revendication 2, caractérisé en ce que le retrait de la carte (1) inactive le relais (52).

4. Lecteur selon revendication 1, caractérisé en ce que ces moyens comprennent un organe (13) exerçant sur un levier (16) portant le connecteur (20) une pression qui au moment de la mise en contact est normale à la surface de la carte (1), organe (13) dont l'action est tributaire du fonctionnement normal du lecteur et antagoniste d'un élément de rappel (21) indépendant de ce fonctionnement.

5. Lecteur selon revendication 4, caractérisé en ce qu'un mécanisme d'échappement permet à l'effort de traction exercé par l'utilisateur, en cas de retrait de la carte, sur la carte (1) de soustraire à l'action de l'organe (13) le levier (16).

6. Lecteur selon revendication 5, caractérisé en ce que la carte (1) prend appui sur un support (2) par l'intermédiaire de butées (24), le levier (16) étant articulé par une liaison à rotule (19) située le plus loin possible de la puce, en ce que, en cas de panne, l'organe (13) reste fixe par rapport au lecteur, et en ce que l'élément de rappel (21) éloigne le levier (16) de la carte après que le mécanisme d'échappement ait libéré ce levier (16) de l'organe (13).

7. Lecteur selon revendication 6, caractérisé en ce que l'organe (13) est une roulette actionnée par des moyens d'entraînement (7, 8, 9, 10, 11, 12) servant aussi partiellement à actionner les moyens de lecture (4, 6, 7) de la carte (1).

8. Lecteur selon revenpication 7, caractérisé en ce que les moyens d'entraînement (7, 8, 9, 10, 11, 12) comprennent un moteur (8).

9. Lecteur selon revendication 8, caractérisé en ce que la carte (1) est maintenue dans le lecteur par des moyens de verrouillage, destinés à empêcher un retrait intempestif de la carte par l'utilisateur, qui sont inactivés d'une part en fin normale d'opération et d'autre part en cas de panne.

10. Lecteur selon revendication 9, caractérisé en ce qu'une pièce intermédiaire (50), placée entre le levier (16) et le connecteur et ayant un certain degré de liberté de mouvement mécanique par rapport au levier (16), cette liberté ne compromettant pas la fiabilité du traitement de données entre la puce et le lecteur, contribue à réduire la friction entre le connecteur (20) et la portion de la carte où est supposée être la puce au moment du retrait de la carte.

11. Procédé de lecture d'une carte optique ou magnétique ou à puce, du type où la carte (1) est lisible d'une part par un connecteur (20) à puce par exemple sur une de ses faces et d'autre part par des moyens optiques ou magnétiques (6) par exemple sur l'autre de ses faces, et est mise en place dans un lecteur par l'utilisateur et retirée par lui de ce lecteur soit en fin normale d'opération soit en cas de panne, caractérisé en ce que le connecteur (20) et les moyens (6) sont tous deux actionnés par un même moyen d'entraînement (8) obéissant à un programme de fonctionnement prévoyant soit d'abord un essai de lecture par les moyens optiques ou magnétiques (6) et ensuite un essai de lecture par le connecteur (10), soit les mêmes essais dans l'ordre inverse.
